# EUROPÄISCHE PATENTANMELDUNG

(11) **EP 4 524 521 A1**
(43) Veröffentlichungstag der Anmeldung: **19.03.2025**
(21) Anmeldenummer: 23197629.1
(22) Anmeldetag: 15.09.2023
(51) Int. Cl.: G01F 11/24, B65B 1/36, B65B 37/08, B65B 37/20, G01F 1/58

(54) **KAPAZITIVE SENSORANORDNUNG FÜR EINE SCHÜTTGUTDOSIERVORRICHTUNG**

(71) Anmelder: Harro Höfliger Verpackungsmaschinen GmbH, 71573 Allmersbach im Tal (DE)
(72) Erfinder: Bohn, Katharina, 71573 Allmersbach im Tal (DE)
(74) Vertreter: Zurhorst, Stefan

(57) **Zusammenfassung**

Die Erfindung betrifft eine kapazitive Sensoranordnung (17) für eine Schüttgutdosiervorrichtung zur Massenbestimmung von mittels der Schüttgutdosiervorrichtung erzeugten Dosiermengen (2). Die Sensoranordnung (17) weist mindestens einer Sensoreinheit (42) auf, welche eine erste Elektrode (11), eine zweite Elektrode (12) und ein zwischen den beiden Elektroden (11, 12) positioniertes Einsatzstück (13) umfasst. In dem Einsatzstück (13) ist ein in einer Vertikalrichtung (z) sich erstreckender Messkanal (10) ausgebildet. Auf einer dem Einsatzstück (13) abgewandten Seite von zumindest einer Elektrode (11, 12) ist eine in einer Horizontalrichtung (y) auf die betreffende Elektrode (11, 12) einwirkende Spannvorrichtung (14) angeordnet. Zumindest die beiden Elektroden (11, 12) und das zwischenliegende Einsatzstück (13) sind im gelösten Zustand der Spannvorrichtung (14) in der Horizontalrichtung verschiebbar.

## Beschreibung

Die Erfindung betrifft eine kapazitive Sensoranordnung für eine Schüttgutdosiervorrichtung zur Massenbestimmung von mittels der Schüttgutdosiervorrichtung erzeugten Dosiermengen.

Beispielsweise im Pharmabereich, aber auch im Bereich von Nahrungsergänzungsmitteln oder dgl. werden Schüttgüter in Form von Pulver, Pellets oder Microtabletten verarbeitet, die für die vorgesehene Darreichungsform in präzise abgemessenen Teilmengen bzw. Dosiermengen bereitgestellt werden müssen. Zielbehälter beispielsweise in Form von Blistern, Steckkapseln oder dergleichen werden mit solchen abgemessenen Dosiermengen eines solchen Schüttgutes befüllt, so dass der Verbraucher entsprechende Einheitsdosen zur Verfügung hat und einnehmen kann.

Derartige Schüttgüter werden auf sogenannten Walzendosierern, Stechhebern oder dergleichen in einzeln abgemessene Dosiermengen überführt, welche dann in jeweilig zugeordneten Zielbehältern abgefüllt werden. Ein hier beispielhaft herangezogener Walzendosierer umfasst eine Dosierwalze, welche umfangsseitig mit mindestens einer, im Regelfall mit mehreren Dosieröffnungen versehen ist, wobei die Dosieröffnungen innenseitig mittels eines Filterelements begrenzt sind und durch das Filterelement hindurch mit einem Unterdruck beaufschlagbar sind. Unter Einwirkung des Unterdrucks wird Pulver in die Dosieröffnungen eingesaugt, wobei sich Dosiermengen des Pulvers bilden, deren Volumen dem Volumen der jeweiligen Dosieröffnung entspricht. Die solchermaßen gebildeten Dosiermengen werden dann aus den Dosieröffnungen mittels Überdruck ausgestoßen und zum Zielbehälter weitergeleitet.

Aus den vorangegangenen Ausführungen wird deutlich, dass es sich bei der Dosierung mittels eines hier zugrunde gelegten Schüttgutdosierers um eine volumetrische Dosierung handelt. Angestrebt ist im Regelfall aber eine Dosierung, bei der die abgemessene Dosiermenge eine bestimmte Masse innerhalb einer zulässigen Toleranzbandbreite aufweist. Für die volumetrische Dosierung ist es also von Bedeutung, dass es eine möglichst wiederholbare Relation zwischen dem abgemessenen Volumen und der dabei tatsächlich erzielten Masse gibt.

Zur Prüfung der tatsächlich erzielten Dosiergenauigkeit werden zunehmend sogenannte "Advanced Mass Verification" (AMV-) Systeme eingesetzt, wobei eine kapazitive Messvorrichtung zum Einsatz kommt. Diese umfasst zwei beidseitig einer Messstrecke angeordnete Elektroden, zwischen denen sich ein kapazitives Feld ausbildet. Die aus der Dosieröffnung ausgeblasene Dosiermenge fällt durch die kapazitive Messstrecke und erzeugt dabei aufgrund ihrer dielektrischen Eigenschaften eine Feldänderung und in der Folge ein kapazitives Messsignal. Bei korrekter Kalibrierung gibt dieses Messsignal Aufschluss über die Masse der Dosiermenge und erlaubt eine stichprobenartige oder sogar 100%ige Kontrolle des Dosiervorganges.

Zur Bildung der Messstrecke werden aus Kunststoff bestehende Einsatzstücke verwendet, in welchen ein durchgehender Messkanal ausgebildet ist. Solche Einsatzstücke ermöglichen unter anderem eine optimale, wiederholbare, und weitgehend parallele Platzierung der beiden Elektroden relativ zueinander und auch relativ zur tatsächlichen Messstrecke.

Ein in der Praxis auftretende Schwierigkeit besteht darin, die Elektroden möglichst flächig an die Außenseite des Einsatzstücks zu pressen. Eine weitere Schwierigkeit stellt die seitliche Positionierung von mehreren in einer Reihe angeordneten Einsatzstücken dar. Diese müssen untereinander einen bestimmten Abstand einnehmen, um exakt zu den einzelnen Fallstrecken von mehreren Dosiermengen ausgerichtet zu sein, welche gleichzeitig aus einer Reihe von Dosieröffnungen ausgestoßen wurden. Um dies zu erreichen, werden bei den bisher bestehenden Sensoren die Elektroden über Passstücke fixiert. Die Breite der Passstücke wird über das Einlegen von Folien auf das richtige Maß gebracht. Dieser Prozess ist sehr aufwändig. Zudem ist eine Vorspannung der Elektroden nicht möglich.

Der Erfindung liegt die Aufgabe zugrunde, ein kapazitive Sensoranordnung anzugeben, welche leicht und präzise justiert werden kann.

Diese Aufgabe wird durch eine Sensoranordnung mit den Merkmalen des Anspruchs 1 gelöst.

Nach der Erfindung ist eine kapazitive Sensoranordnung mit mindestens einer Sensoreinheit vorgesehen, wobei die Sensoreinheit eine erste Elektrode, eine zweite Elektrode und ein zwischen den beiden Elektroden positioniertes Einsatzstück umfasst, wobei in dem Einsatzstück ein in einer Vertikalrichtung sich erstreckender Messkanal ausgebildet ist, wobei auf einer dem Einsatzstück abgewandten Seite von zumindest einer Elektrode eine in einer Horizontalrichtung auf die betreffende Elektrode einwirkende Spannvorrichtung angeordnet ist, und wobei zumindest die beiden Elektroden und das zwischenliegende Einsatzstück im gelösten Zustand der Spannvorrichtung in der Horizontalrichtung verschiebbar sind.

Die Verschiebbarkeit der Elektroden und des Einsatzstücks erlauben eine exakte Positionierung an der gewünschten Stelle. Durch Festziehen der Spannvorrichtung werden zwei Funktionen auf einmal ausgeführt. Zum einen werden die beiden Elektroden und das dazwischen liegende Einsatzstück zu einem Paket zusammengedrückt, wobei sich die Elektroden lagegenau und mit Vorspannung an die Außenseite des Einsatzstücks anschmiegen. Zum anderen wird die solchermaßen zusammengedrückte Einheit aus Elektroden und Einsatzstücke in ihrer gewählten Position zuverlässig fixiert. Montagezeit und Montageaufwand sind auf ein Minimum reduziert. Ein Austausch der genannten Einheit bei Beschädigung oder bei Formatwechsel ist mit geringem Aufwand möglich.

In einer einfachen Grundausführung der Erfindung kann es ausreichen, nur ein einzelnes Spannstücke auf der Seite von nur einer Elektrode anzuordnen, während auf der gegenüberliegenden Seite beispielsweise ein fester Anschlag positioniert ist. In zweckmäßiger Weiterbildung ist auf der jeweiligen dem Einsatzstück abgewandten Seite beider Elektroden je eine in der Horizontalrichtung auf die betreffende Elektrode einwirkende Spannvorrichtung angeordnet. Durch wechselseitiges Festziehen beider Spannvorrichtungen lässt sich nicht nur eine Klemmung der Elektroden an das Einsatzstück erzielen, sondern auch eine seitliche Lagejustierung der gespannten Baueinheit feinfühlig und exakt durchführen.

Die Erfindung kann bereits bei einer Ausführung der Sensoranordnung mit nur einer Sensoreinheit, also mit nur einem Einsatzstück und mit einem Paar von Elektroden vorteilhaft zum Einsatz kommen. Bevorzugt sind mehrere Sensoreinheiten in einer in der Horizontalrichtung sich erstreckenden Reihe angeordnet, wobei zwischen den Sensoreinheiten je eine Spannvorrichtung angeordnet ist. Zweckmäßig sind dabei mehrere und insbesondere alle Spannvorrichtungen im gelösten Zustand in der Horizontalrichtung verschiebbar. Durch ein sequentielles Anziehen aller Spannvorrichtungen können alle zunächst noch verschiebbaren Teile in der Horizontalrichtung lagegenau positioniert und dann in ihrer aufgefundenen Position fixiert werden. Unter Ausgleich selbst von groben Toleranzen können die Abstände zueinander eingestellt werden. Gleichzeitig werden die Elektroden lagegenau an die Außenseite des Einsatzstücks gepresst, sodass sie zur Erzielung der gewünschten Messgenauigkeit exakt zum Messkanal bzw. zur Messstrecke ausgerichtet sind. Insgesamt ist bei kurzer Montagezeit eine hohe Lagegenauigkeit und damit eine hohe Qualität hinsichtlich der Messgenauigkeit erzielt.

Zudem ist ein modulares System geschaffen, welches in einfacher Weise hinsichtlich der Kanal- bzw. Messstreckenanzahl und auch hinsichtlich der zum Einsatz kommenden Formate angepasst werden kann.

Für die konkrete Ausgestaltung der Spannvorrichtung kommen verschiedene konstruktive Ansätze in Betracht. In einer zweckmäßigen Ausführungsform umfasst die Spannvorrichtung ein erstes Spannelement, ein zweites Spannelement und eine die beiden Spannelemente gegeneinander verspannende Spannschraube, wobei an zumindest einem der beiden Spannelemente und insbesondere an beiden Spannelementen eine mit dem jeweils anderen Spannelement in Kontakt stehende Gleitschräge ausgebildet ist. Vorteilhaft sind dabei die beiden Spannelemente als Gleichteile mit je einer Gleitschräge ausgebildet. Die Konstruktion ist einfach und kostengünstig im Aufbau. Sie hält zuverlässig die eingestellte Position und die aufgebrachte Spannkraft. Zudem lassen sich hohe Spannwege realisieren, sodass Positionsanpassungen der Einheit aus Elektroden und Einsatzstück über einen großen verfügbaren Stellweg realisiert werden können.

Ein Ausführungsbeispiel der Erfindung ist nachfolgend anhand der Zeichnung näher beschrieben. Es zeigen:
- Fig. 1: in einer schematischen Querschnittdarstellung eine Schüttgutdosiervorrichtung am Beispiel eines Walzendosierers mit einem Produktvorrat, mit einer Dosierwalze und mit einer kapazitiven Sensoranordnung zur Massenbestimmung der einzelnen Dosiermengen,
- Fig. 2: in einer schematischen Explosionsdarstellung Teile einer Spannvorrichtung der kapazitiven Sensoranordnung als Teil der Messvorrichtung nach Fig. 1 mit zwei Spannelementen, mit einer Spannschraube und mit einer Mutter,
- Fig. 3: in einer schematischen Längsschnittdarstellung die Messvorrichtung nach den Fig. 1 und 2 im unverspannten Zustand, und
- Fig. 4: die Anordnung nach Fig. 3 im verspannten, betriebsbereit justierten Zustand.

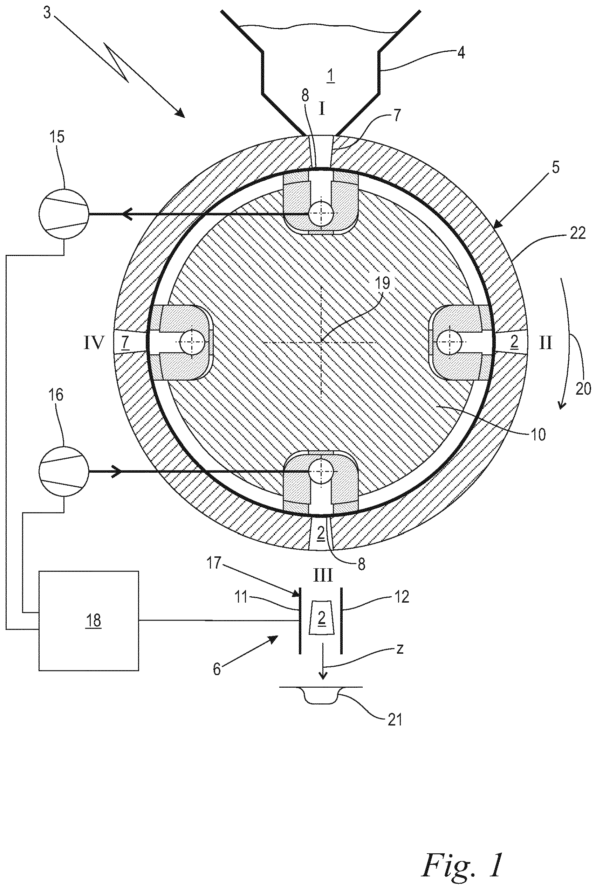

Fig. 1 zeigt in einer schematischen Querschnittdarstellung eine Schuttgutdosiervorrichtung am Beispiel eines Walzendosierers 3 bei der Erzeugung einzelner Dosiermengen 2 eines Schüttgutes und zur Überführung solcher einzelner Dosiermengen 2 in einen Zielbehälter 21. Anstelle des Walzendosierers 3 kann auch ein Schieberdosierer, ein Stechheber oder jede andere geeignete Bauform einer Schüttgutdosiervorrichtung vorgesehen sein. Bei dem zu dosierenden Schüttgut handelt es sich hier um ein pulvriges Produkt 1, namentlich um ein pharmazeutisches Pulver. Es kann sich aber auch um ein Nahrungsergänzungsmittel oder dergleichen handeln. Anstelle eines pulvrigen Produkts 1 kommen auch Pellets, Microtabletten oder andere Schüttgüter in Betracht. Der Zielbehälter 21 ist hier ein schematisch angedeuteter Blister, der nach der Befüllung noch mit einer Deckfolie versiegelt wird. Als Zielbehälter 21 kommen aber auch Steckkapseln oder andere Behälter in Betracht.

Der Walzendosierer 3 umfasst einen Produktvorrat 4, eine Dosierwalze 5 und eine kapazitive Messvorrichtung 6. Die kapazitive Messvorrichtung 6 wird auch als "Advanced Mass Verification System" oder AMV-System bezeichnet. Im trichterförmigen Produktvorrat 4 wird das pulvrige Produkt 1 zur Abmessung bereitgehalten. Mittels der Dosierwalze 5 werden aus dem Produktvorrat 4 Teilmengen des pulvrigen Produkts 1 entnommen und daraus volumetrisch exakt definierte Dosiermengen 2 gebildet. Eine anschließende Massenbestimmung einzelner, insbesondere aller Dosiermengen 2, erfolgt mittels der kapazitiven Messvorrichtung 6.

Die Dosierwalze 5 erstreckt sich entlang einer Längsachse und ist bezogen auf diese Längsachse im Wesentlichen zylindrisch ausgebildet. Umfangsseitig weist sie mindestens eine Dosieröffnung 7 auf. Im gezeigten bevorzugten Ausführungsbeispiel ist die Dosierwalze 5 mit mehreren Dosieröffnungen 7 versehen. Obwohl in der hier gezeigten Querschnittsdarstellung nicht erkennbar, bilden jeweils zwei oder drei bis zwölf Dosieröffnungen 7 eine Öffnungsreihe, die achsparallel zur Drehachse 19 verläuft. Vier solcher Öffnungsreihen sind in Umfangsrichtung um die Drehachse 19 herum in gleichen Winkelabständen, also in 90° zueinander positioniert. Von den genannten Öffnungsreihen sind hier je eine, also insgesamt vier Dosieröffnungen 7 erkennbar. In Achsrichtung und/oder in Umfangsrichtung können aber auch abweichende Anzahlen von Dosieröffnungen 7 bzw. Öffnungsreihen zweckmäßig sein.

Die Dosieröffnungen 7 sind radial nach außen offen und radial nach innen durch Filterelemente 8 begrenzt. Zwischen einer Außenseite 22 der Dosierwalze 5 und den radial inneren Filterelementen 8 weisen die Dosieröffnungen 7 ein definiert vorgegebenes Volumen auf. Die Filterelemente 8 sind luftdurchlässig, nicht jedoch durchlässig für das Schüttgut, hier also für das pulvrige Produkt 1. Die Dosieröffnungen 7 sind durch das jeweilige Filterelement 8 hindurch bei Bedarf - gesteuert durch ein Steuergerät 18 - mit einem Unterdruck aus einer Unterdruckquelle 15 oder mit einem Überdruck aus einer Überdruckquelle 16 beaufschlagbar.

Die Dosierwalze 5 ist um eine Drehachse 19 in Richtung eines Pfeils 20 drehbar gelagert und mit einem zugehörigen, hier nicht dargestellten Drehantrieb versehen. Im Betrieb wird die Dosierwalze getaktet gedreht, wobei die einzelnen Dosieröffnungen 7 in mindestens zwei Takten zyklisch in einer in Gewichtskraftrichtung oberen Füllposition I und einer in Gewichtskraftrichtung unteren Ausstoßposition III zu liegen kommen. Anstelle einer getakteten Bewegung kann auch eine kontinuierliche Drehung zweckmäßig sein. Im gezeigten Ausführungsbeispiel durchlaufen die einzelnen Dosieröffnungen 7 in vier Takten zyklisch vier verschiedene Positionen, beginnend mit der oberen Füllposition I, gefolgt von einer ersten Zwischenposition II. Danach folgen die untere Ausstoßposition III und eine zweite Zwischenposition IV, bevor der Zyklus an der oberen Füllposition I wieder beginnt.

In der oberen Füllposition I wird die jeweilige Dosieröffnung 7 mit dem pulvrigen Produkt 1 unter Bildung einer Dosiermenge 2 aus dem Produktvorrat 4 heraus befüllt. Hierzu werden die Dosieröffnungen 7 mit Unterdruck aus der Unterdruckquelle 15 beaufschlagt. Der Unterdruck saugt das pulvrige Produkt 1 aus dem Produktvorrat 4 in die Dosieröffnung 7. Folglich entsteht eine Dosiermenge 2 des pulvrigen Produkts 1, die die Dosieröffnung 7 vollständig ausfüllt, und deren Volumen dem Volumen der Dosieröffnung 7 entspricht. In der nachfolgenden ersten Zwischenposition II kann optional eine Füllstandskontrolle vorgenommen werden. In der unteren Ausstoßposition III werden die Dosieröffnungen 7 mit Überdruck aus der Überdruckquelle 16 beaufschlagt, wodurch die Dosiermengen 2 aus den Dosieröffnungen 7 ausgestoßen und dem jeweiligen Zielbehälter 21 zugeführt werden. Die nunmehr entleerten Dosieröffnungen 7 werden zur zweiten Zwischenposition IV weiterbewegt und können dort optional beispielsweise durch Ausblasen gereinigt werden.

Teil der oben schon erwähnten kapazitiven Messvorrichtung 6 zur Massenbestimmung der einzelnen Dosiermengen 2 ist eine kapazitive Sensoranordnung 17, welche ebenfalls mit dem Steuergerät 18 verbunden ist und zwei zueinander beabstandete Elektroden 11, 12 aufweist. Im Steuergerät 18 werden die Messdaten des kapazitiven Sensors 17 erfasst und ausgewertet, was insgesamt zur Bildung der Messvorrichtung 6 führt. Die aus der Dosieröffnung 7 in der unteren Ausstoßposition III ausgestoßenen Dosiermengen 2 fallen in einer Vertikalrichtung z der Gewichtskraft folgend zwischen den Elektroden 11, 12 der kapazitiven Sensoranordnung 17 hindurch in den Zielbehälter 21. Aus der hierbei in der kapazitiven Sensoranordnung 17 erfolgenden Feldänderung wird die Masse der hindurchtretenden Dosiermenge 2 entsprechend einem AMV-System bestimmt. Zwar ist es nicht zwingend erforderlich, dass die Masse jeder einzelnen ausgeworfenen Dosiermenge 2 bestimmt wird. Vielmehr kann es ausreichen, wenn sich einzelne Massenbestimmungen erst nach einigen Dosierzyklen stichprobenartig wiederholen. Bevorzugt wird jedoch eine Massenbestimmung bei 100% der abgemessenen Dosiermengen 2 durchgeführt.

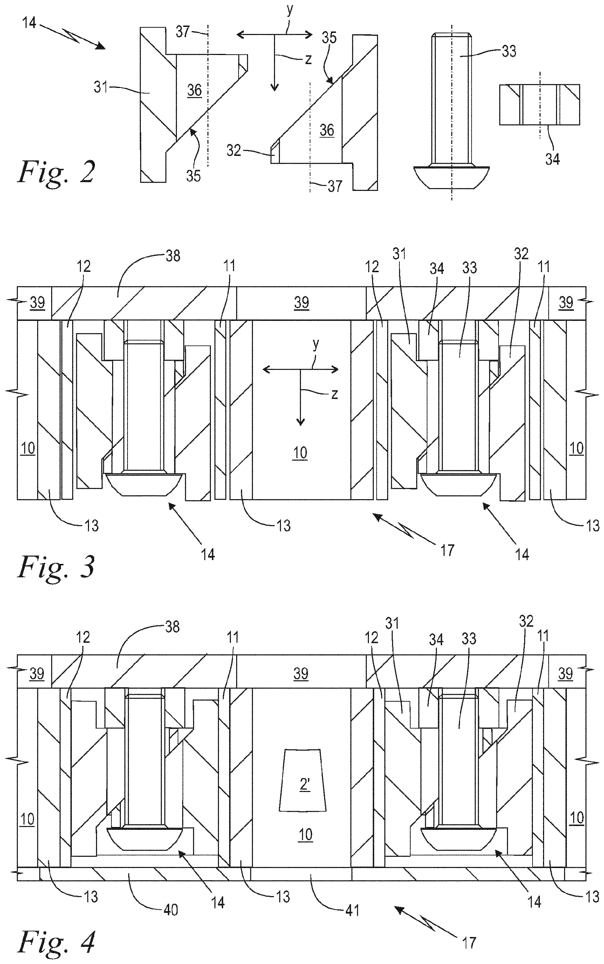

Fig. 2 zeigt in einer schematischen Explosionsdarstellung Teile einer Spannvorrichtung 14 (Fig. 3, 4) der kapazitiven Sensoranordnung 17 als Teil der Messvorrichtung 6 nach Fig. 1 mit zwei Spannelementen 31, 32, mit einer Spannschraube 33 und mit einer Mutter 34. Anstelle der Mutter 34 kann auch eine Gewindebohrung in einem Gehäuse der Sensoranordnung oder eine Bohrung zur Aufnahme eines selbstschneidenden Gewindes zweckmäßig sein. Alle Teile sind hier in ihrer Einbaulage relativ zur Vertikalrichtung z (Fig. 1, 3, 4) dargestellt. Die Spannschraube 33 weist ein Außengewinde auf und ist in der Vertikalrichtung z ausgerichtet, wobei dazu korrespondierend auch die Mutter 34 mit ihrem Innengewinde ausgerichtet ist.

Das erste Spannelement 31 ist mit einer flächigen Gleitschräge 35 versehen, welche hier in einem 45°-Winkel zur Vertikalrichtung z liegt. Es können aber auch abweichende Winkel insbesondere in einem Bereich von 30° bis 60° zweckmäßig sein. Im Bereich der Gleitschräge 35 ist das erste Spannelement 31 von einem Langloch 36 durchgriffen, dessen Lochachse 37 parallel zur Vertikalrichtung z liegt, und dessen breite Querschnittsachse parallel zu einer Horizontalrichtung y verläuft.

Die beiden Spannelemente 31, 32 sind als Gleichteile mit je einer Gleitschräge 35 ausgebildet. Mit anderen Worten ist das zweite Spannelement 32 identisch zum ersten Spannelement 31 ausgeführt. Zu seinen körperlichen Merkmalen des zweiten Spannelementes 32 gilt das oben zum ersten Spannelement 31 gesagte in anaolger Weise. Jedoch ist es um 180° um eine in der Horizontalrichtung y verlaufende Achse gedreht, sodass die Gleitschrägen 35 beider Spannelemente 31, 32 im montierten Zustand einander zugewandt sind.

Fig. 3 zeigt in einer schematischen Längsschnittdarstellung die kapazitive Sensoranordnung 17 nach den Fig. 1 und 2 im unverspannten Zustand. Die Schnittebene der Darstellung nach Fig. 3 ist durch die parallel zur Drehachse 19 (Fig. 1) verlaufende Horizontalrichtung y und die in Schwerkraftrichtung verlaufende Vertikalrichtung z aufgespannt.

Erfindungsgemäß weist die Sensoranordnung 17 mindestens eine, hier mehrere Sensoreinheiten 42 auf. Eine einzelne Sensoreinheit 42 umfasst eine erste Elektrode 11, eine zweite Elektrode 12 und ein zwischen den beiden Elektroden 11, 12 positioniertes Einsatzstück 13. Mit anderen Worten befindet sich bezogen auf die Horizontalrichtung y die erste Elektrode 11 auf der einen Seite und die zweite Elektrode 12 auf der gegenüberliegenden Seite des jeweiligen Einsatzstücks 13. Die Paare von ersten und zweiten Elektroden 11, 12 bilden zusammen jeweils einen Kondensator. Diese Kondensatoren sind mit dem Steuergerät 18 (Fig. 1) zu der schon erwähnten kapazitiven Messvorrichtung 6 verschaltet. Die Einsatzstücke 13 sind aus Kunststoff mit geeigneten dielektrischen Eigenschaften gefertigt und liegen im Feld des jeweiligen Kondensators. In jedem Einsatzstück 13 ist je ein in der Vertikalrichtung z verlaufender und von oben nach unten durchgehender Messkanal 10 ausgebildet.

Gemäß der Erfindung ist auf einer dem Einsatzstück 13 abgewandten Seite von zumindest einer der beiden Elektroden 11, 12 einer Sensoreinheit 42 eine in der Horizontalrichtung y auf die betreffende Elektrode 11, 12 einwirkende Spannvorrichtung 14 angeordnet. Im Ausführungsbeispiel nach Fig. 3 ist auf der jeweiligen dem Einsatzstück 13 abgewandten Seite beider Elektroden 11, 12 von je einer Sensoreinheit 42 je eine solche Spannvorrichtung 14 angeordnet. Insbesondere ist in Fig. 3 erkennbar, dass mehrere Sensoreinheiten 42 in einer in der Horizontalrichtung y sich erstreckenden Reihe angeordnet sind, wobei zwischen den Sensoreinheiten 42 je eine Spannvorrichtung 14 angeordnet ist. Die zwischenliegenden Spannvorrichtungen 14 wirken demnach beidseitig, nämlich einerseits auf die eine Elektrode 11 einer bestimmten Sensoreinheit 42 und andererseits auch auf die jeweils andere Elektrode 12 der jeweils benachbarten Sensoreinheit 42. Die Anzahl der Einsatzstücke 13 mit dem jeweiligen darin ausgebildeten Messkanal 10 entspricht der Anzahl der weiter oben im Zusammenhang mit Fig. 1 beschriebenen Anzahl von Dosieröffnung 7 innerhalb einer parallel zur Drehachse bzw. parallel zur Horizontalrichtung y verlaufenden Öffnungsreihe. Im gezeigten Ausführungsbeispiel gibt es also zwei oder drei bis zwölf Einsatzstücke 13 mit jeweils einem darin ausgebildeten Messkanal 10, wobei je ein Messkanal 10 mit je einer Dosieröffnung 7 der betreffenden Öffnungsreihe korrespondiert.

Die erfindungsgemäßen Spannvorrichtungen 14 sind grundsätzlich von einem solchen Aufbau, dass ein Spannvorgang zu einer Aufweitung der jeweiligen Spannvorrichtung 14 in der Horizontalrichtung y führt. In der konstruktiven Umsetzung nach den Fig. 2, 3 liegen hierfür zwei Spannelemente 31, 32 paarweise mit ihren ebenen und flächigen Gleitschrägen 35 aufeinander, wobei ihre Langlöcher 36 in zumindest teilweiser Überdeckung sind, und wobei die Spannschraube 33 durch die Langlöcher 36 beider Spannelemente 31, 32 hindurch geführt und in die Mutter 34 eingedreht ist. Die Langlöcher 36 erlauben trotz hindurchgeführter Spannschraube 33 eine relative Verschiebbarkeit beider Spannelemente 31, 32 in der Horizontalrichtung y.

Gemäß Fig. 3 sind die Spannvorrichtungen 14 noch nicht festgezogen bzw. nicht gespannt. In der Vertikalrichtung z werden sie zwischen einer obere Grundplatte 38 und einer zur besseren Übersicht nur in Fig. 4 dargestellten unteren Gegenplatte 40 gehalten. Sowohl die Grundplatte 38 als auch Gegenplatte 40 ist mit einer Reihe von Öffnungen 39, 41 versehen, die in Anzahl und Abstand zueinander der Anzahl und dem Abstand der Dosieröffnungen 7 innerhalb einer Öffnungsreihe (Fig. 1) entspricht. Im gelösten Zustand der Spannvorrichtungen 14 nach Fig. 3 sind die Elektroden 11, 12 und das Einsatzstück 13 aller Sensoreinheiten 42 in der Horizontalrichtung y verschiebbar, was durch einen horizontalen Abstand der genannten Teile zueinander grafisch zum Ausdruck gebracht ist. Auch die Spannvorrichtungen 14 sind allesamt im gezeigten gelösten Zustand in der Horizontalrichtung y verschiebbar. An beiden seitlichen Enden der Reihe von Sensoreinheiten 42 befindet sich jeweils ein nicht dargestellter fester Anschlag, gegen den sich die jeweils äußerste Spannvorrichtung 14 abstützen kann. Es kann aber auch zweckmäßig sein, eine der beiden Anschläge oder auch beide Anschläge durch eine in der Horizontalrichtung y fixierte, also nicht verschiebbare Spannvorrichtung 14 zu ersetzen. In diesem Falle wären dann alle übrigen Spannvorrichtungen 14, also alle Spannvorrichtungen 14 bis auf eine beziehungsweise bis auf zwei davon in der Horizontalrichtung y verschiebbar.

Ein Spannen der jeweiligen Spannvorrichtung 14 erfolgt durch Festziehen der Spannschauben 33, welche die Paare von Spannelementen 31, 32 in der Vertikalrichtung z gegeneinanderdrücken. Dabei bewirken die Gleitschrägen, dass sich die Spannelemente 31, 32 in der Horizontalrichtung y auseinanderbewegen und insgesamt zu einer seitlichen Aufweitung der Spannvorrichtung 14 führen. Diese seitliche Aufweitung führt dazu, dass sich die Spannvorrichtung 14 seitlich an die angrenzenden Elektroden 11, 12 anlegen und diese auf die Außenseite des jeweiligen Einsatzstücks 13 drücken.

Fig. 4 zeigt die Anordnung nach Fig. 3 mit solchermaßen gespannten Spannvorrichtungen 14. Das Spannen der Spannvorrichtungen hat mehrere erfindungsgemäße Wirkungen. Zum einen erfolgt eine flächige Anpressung der Elektroden 11, 12 an die Außenseite des jeweiligen Einsatzstücks 13 derart, dass die Elektroden 11, 12 lagegenau zum jeweiligen Messkanal 10 innerhalb des Einsatzstücks 13 ausgerichtet sind. Zum anderen kann durch koordiniertes Spannen der Spannvorrichtungen eine seitliche Positionierung der einzelnen Sensoreinheiten 42 relativ zueinander und auch relativ zu den Öffnungen 39, 41 bzw. zu den Fallbahnen der einzelnen Dosiermengen 2 vorgenommen werden. Abstand und Position der Sensoreinheiten 42 können also genau justiert und derart fixiert werden, dass eine einzelne Dosiermenge 2 gemäß Fig. 4 mittig durch den Messkanal 10 fällt und dabei mittels der genau ausgerichteten Elektroden 11, 12 ein exakt reproduzierbares kapazitives Messsignal generiert.

Durch Lösen der Spannschrauben 33 lässt sich die gesamte kapazitive Sensoranordnug 17 demontieren. Die Einsatzstücke 13 oder auch ganze Sensoreinheiten 42 lassen sich leicht austauschen und in gleicher oder beliebig abweichender Anzahl baukastenartig zusammensetzen.

## Patentansprüche

1. Kapazitive Sensoranordnung (17) für eine Schüttgutdosiervorrichtung zur Massenbestimmung von mittels der Schüttgutdosiervorrichtung erzeugten Dosiermengen (2), mit mindestens einer Sensoreinheit (42), welche eine erste Elektrode (11), eine zweite Elektrode (12) und ein zwischen den beiden Elektroden (11, 12) positioniertes Einsatzstück (13) umfasst, wobei in dem Einsatzstück (13) ein in einer Vertikalrichtung (z) sich erstreckender Messkanal (10) ausgebildet ist, wobei auf einer dem Einsatzstück (13) abgewandten Seite von zumindest einer Elektrode (11, 12) eine in einer Horizontalrichtung (y) auf die betreffende Elektrode (11, 12) einwirkende Spannvorrichtung (14) angeordnet ist, und wobei zumindest die beiden Elektroden (11, 12) und das zwischenliegende Einsatzstück (13) im gelösten Zustand der Spannvorrichtung (14) in der Horizontalrichtung verschiebbar sind.

2. Sensoranordnung nach Anspruch 1,
**dadurch gekennzeichnet, dass** auf der jeweiligen dem Einsatzstück (13) abgewandten Seite beider Elektroden (11, 12) je eine in der Horizontalrichtung (y) auf die betreffende Elektrode (11, 12) einwirkende Spannvorrichtung (14) angeordnet ist.

3. Sensoranordnung nach Anspruch 1 oder 2,
**dadurch gekennzeichnet, dass** mehrere Sensoreinheiten (42) in einer in der Horizontalrichtung (y) sich erstreckenden Reihe angeordnet sind, wobei zwischen den Sensoreinheiten (42) je eine Spannvorrichtung (14) angeordnet ist.

4. Sensoranordnung nach Anspruch 3,
**dadurch gekennzeichnet, dass** mehrere und insbesondere alle Spannvorrichtungen (14) im gelösten Zustand in der Horizontalrichtung (y) verschiebbar sind.

5. Sensoranordnung nach einem der Ansprüche 1 bis 4,
**dadurch gekennzeichnet, dass** die Spannvorrichtung (14) ein erstes Spannelement (31), ein zweites Spannelement (32) und eine die beiden Spannelemente (31, 32) gegeneinander verspannende Spannschraube (33) umfasst, wobei an zumindest einem der beiden Spannelemente (31, 32) und insbesondere an beiden Spannelementen (31, 32) eine mit dem jeweils anderen Spannelement (32, 31) in Kontakt stehende Gleitschräge (35) ausgebildet ist.

6. Sensoranordnung nach Anspruch 5,
**dadurch gekennzeichnet, dass** die beiden Spannelemente (31, 32) als Gleichteile mit je einer Gleitschräge (35) ausgebildet sind.
